# EUROPÄISCHE PATENTSCHRIFT

(11) **EP 2 072 548 B1**
(45) Veröffentlichungstag und Bekanntmachung des Hinweises auf die Patenterteilung: **22.02.2017**
(21) Anmeldenummer: 08171740.7
(22) Anmeldetag: 16.12.2008
(51) Int. Cl.: C08G 18/09, C08G 18/48, C08G 18/76

(54) **Verfahren zur Herstellung von Urethangruppen und Isocyanuratgruppen enthaltenden Hartschaumstoffen**
Method for manufacturing rigid foams containing urethane and isocyanurate groups
Procédé de fabrication de mousses rigides contenant des groupes d'uréthane et de groupes d'isocyanurate

(30) Priorität: 19.12.2007 EP 07150102
(43) Veröffentlichungstag der Anmeldung: 24.06.2009
(73) Patentinhaber: BASF SE, 67056 Ludwigshafen am Rhein (DE)
(72) Erfinder: Krogmann, Jörg, 49393, Lohne (DE); Klassen, Johann, 32351, Stemwede-Oppendorf (DE)
(74) Vertreter: BASF IP Association

(56) Entgegenhaltungen:
- EP-A- 0 581 191
- EP-A- 1 681 310
- WO-A-00/47647
- DE-A1- 19 917 787
- US-A- 5 889 067
- US-A1- 2002 045 690

## Beschreibung

Gegenstand der Erfindung ist ein Verfahren zur Herstellung von Urethangruppen enthaltenden Hartschaumstoffen, vorzugsweise von offenzelligen Hartschaumstoffen. Die Schaumstoffe können neben Urethangruppen auch Isocyanuratgruppen enthalten.

Polyurethan-Hartschaumstoffe sind seit langem bekannt. Ein wesentliches Einsatzgebiet ist die Temperaturisolierung. In jüngerer Zeit werden zunehmend Vakuumisolationspaneele zur Isolierung eingesetzt.

Solche Vakuumisolationseinheiten bestehen in der Regel aus einem wärmeisolierenden Kernmaterial, beispielsweise offenzelligem Polyurethan (PUR)-Hartschaum, offenzelligem extrudierten Polystyrolschaum, Kieselgelen, Glasfasern, Kunststoffschüttungen, gepreßtem Mahlgut aus PUR-Hartschaum bzw. -Halbhartschaum oder Perlite, welches in eine gasdichte Folie verpackt, evakuiert und luftdicht eingeschweißt wird.

Vakuumisolationseinheiten finden unter anderem Anwendung für Kühlgerätegehäuse, Behälter für Kühlfahrzeuge oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen bei etwa 20 - 30%.

Bei einer weiteren Ausführungsform können Vakuumisolationseinheiten durch Einbringen eines Schaumsystems für offenzellige Polyurethan-Hartschaumstoffe in das Innere der Doppelwand eines doppelwandigen Gehäuses, beispielsweise eine Kühlmöbeltür oder ein Kühlmöbelgehäuse, wo das System zu einem offenzelligen Schaum aushärtet, und nachfolgende Evakuierung hergestellt werden. Bei dieser Ausführungsform kann eine Vakuumpumpe mit der mit Schaum gefüllten Doppelwand verbunden werden, durch die das Vakuum bei Bedarf erneuert werden kann.

Bei der Verwendung von Polyurethan-Hartschaumstoffen für derartige Anwendungen ist es wesentlich, dass die Zellen des Schaums offen sind, um eine vollständige Evakuierung des Vakuum-Isolationspaneels zu erreichen. Hierfür sind eine Reihe von Möglichkeiten bekannt.

DE 19917787 beschreibt ein Verfahren zur Herstellung komprimierter Polyurethanharstschaumstoffe. WO 0047647 offenbart ein Verfahren zur Herstellung feinzelliger Polyurethanhartschaumstoffen. EP 1681310 befasst sich mit der Verwendung einer Zusammensetzung enthaltend unter anderem ein Isocyanat-terminiertes Prepolymer, zur Herstellung von Beschichtungs- und/oder Klebstoffen. EP 0581191 bezieht sich auf ein Verfahren zur Herstellung offenzelliger Polyurethanschaumstoffe; US 5889067 beschreibt ebenfalls eine Methode zur Erzeugung eines offenzelligen Polyurethanhartschaumstoffs. US 2002045690 offenbart ein Pultrusionsverfahren unter Einsatz von Polyisocyanuraten.

EP 905 159 sowie EP 905 158 offenbaren Verfahren zur Herstellung von offenzelligen Hartschaumstoffen, wobei bevorzugt ein Veresterungsprodukt aus Fettsäuren und mehrfunktionellen Alkoholen als Emulgierhilfsmittel zur Unterstützung der lagerstabilen treibmittelhaltigen Emulsion eingesetzt wird. Dabei werden insbesondere Kombinationen von Perfluoralkanen und Alkanen als physikalische Treibmittel eingesetzt. Der Einsatz von Perfluoralkanen zur Erzeugung feiner Zellen ist bereits aus EP 351 614 bekannt.
In DE 100 09 649 wird ein Verfahren zur Herstellung von offenzelligen Hartschaumstoffen beschrieben, bei dem auf physikalische Treibmittel verzichtet werden kann. Bei der Herstellung dieser Schäume kommt eine Polyolkomponente zum Einsatz, die neben einem Veresterungsprodukt aus Glycerin und Rizinusöl weitere zur Herstellung von Polyurethan-Hartschaumstoffen übliche Polyetheralkohole mit einer Hydroxylzahl im Bereich von 175 bis 300 mgKOH/g enthält.

Die dort beschriebenen Schäume zeigen eine gute Offenzelligkeit und ausreichende mechanische Eigenschaften.

Eine Möglichkeit, die als Kernmaterial für die Vakuumisolationspaneele eingesetzten offenzelligen Polyurethan-Hartschaumstoffe herzustellen, ist das sogenannte Blockschaumverfahren. Ein solches Verfahren ist beispielsweise beschrieben in WO 99/61503. Dabei werden große Schaumblöcke, die zumeist eine Größe von 0,5x1,2x2 Metern aufweisen, hergestellt und mechanisch, zumeist durch Sägen, auf die gewünschte Größe gebracht.

Diese Verfahrensweise ist sehr effektiv. Nachteilig ist jedoch, dass es auf Grund der Exothermie der Urethan-Reaktion im Innern der Blöcke häufig zu einer erhöhten Temperatur kommt, was zu einer erhöhten Rissbildung im Schaum und im Extremfall zu einer thermischen Zersetzung bis hin zu einer Verbrennung im Inneren des Blocks führen kann.

In WO 99/61503 erfolgt die Herstellung der Hartschaumstoffe in Anwesenheit einer cyclischen, mit Isocyanaten reaktiven Harnstoffverbindung. Nach diesem Verfahren konnten jedoch nur Hartschaumblöcke mit geringer Höhe, bis maximal 50 cm, hergestellt werden. Da bei der Blockverschäumung an den Rändern der Blöcke stets eine Haut mit geschlossenen Zellen entsteht, die abgetrennt werden muss, ist der Verschnitt umso größer, je kleiner der Block ist. Damit sind höhere Blöcke effizienter. Außerdem müssen größere Vakuumisolationspaneele nicht aus mehreren PU-Platten zusammengesetzt werden, was ebenfalls einen wirtschaftlichen Vorteil darstellt.

Es war die Aufgabe der vorliegenden Erfindung, ein Verfahren zur Herstellung von bevorzugt offenzelligen, Urethangruppen enthaltenden Hartschaumstoffen zu entwickeln, bei dem nach dem Blockschaumverfahren gearbeitet wird, bei dem der Schaum gute Härtungseigenschaften aufweisen sollte und bei niedrigen Schäumtemperaturen gearbeitet werden kann. Die Rissbildung bei den Schäumen sollte vermieden werden, und die Schäume sollten gute mechanische und Wärmeisolationseigenschaften aufweisen.

Die Aufgabe konnte überraschenderweise gelöst werden durch die Verwendung einer speziellen Mischung von Polyolen bei der Herstellung der Hartschaumstoffe.

Gegenstand der Erfindung war daher ein Verfahren zur Herstellung von Urethangruppen enthaltenden Hartschaumstoffen durch Umsetzung von
a) Polyisocyanaten mit
b) Verbindungen mit mindestens zwei mit Isocyanatgruppen reaktiven b) Verbindungen mit mindestens zwei mit Isocyanatgruppen reaktiven Wasserstoffatomen in Anwesenheit von
c) Katalysatoren und
d) Treibmitteln,
dadurch gekennzeichnet, dass die Mischung der in den Verbindungen mit mindestens zwei mit Isocyanatgruppen reaktiven Wasserstoffatomen b) enthaltenden Alkohole eine Funktionalität im Bereich von 2,5 bis 5,5 und eine Hydroxylzahl im Bereich von 200 - 400 mg KOH/g aufweist, das Treibmittel d) eine Mischung aus Wasser und mindestens einem physikalischen Treibmittel ist, und die Umsetzung bei einem Isocyanatindex im Bereich zwischen 220 - 270 und in Anwesenheit eines Stabilisators e2) und eines Zellöffners e1) durchgeführt wird, wobei der Stabilisator e2) ein Polyether-Polydimethylsiloxan-Copolymer und der Zellöffner e1) eine Mischung aus makromolekularen, ungesättigten Kohlenwasserstoffen mit einem Ester ist und das Gewichtsverhältnis von Zellöffner e1) zu Stabilisator e2) im Bereich von 0,2 - 3 liegt.

Vorzugsweise enthält die Komponente b) mindestens einen zweifunktionellen Polyetheralkohol bi). In einer besonders bevorzugten Ausführungsform des erfindungsgemäßen Verfahren weist der zweifunktionelle Polyetheralkohol bi) eine Hydroxylzahl im Bereich zwischen 80 und 120 mgKOH/g auf. Ihre Herstellung erfolgt durch Anlagerung von Alkylenoxiden, insbesondere Propylenoxid, an zweifunktionelle Startsubstanzen, insbesondere Alkohole. Als zweifunktionelle Startsubstanzen können Wasser, vorzugsweise jedoch Diole, wie Ethylenglykol, Diethylenglykol, Propylenglykol, Dipropylenglykol und/oder Butandiole eingesetzt werden.

Es können weiterhin nach dem erfindungsgemäßen Verfahren Schaumstoffe hergestellt werden.

Vorzugsweise werden für das erfindungsgemäße Verfahren solche Polyetheralkohole eingesetzt, zu deren Herstellung als Alkylenoxid ausschließlich Propylenoxid verwendet wurde. Weiterhin ist es bevorzugt, keine Polyetheralkohole einzusetzen, die unter Verwendung von Aminen als Startsubstanzen hergestellt wurden.

Die nach dem erfindungsgemäßen Verfahren hergestellten Hartschaumstoffe sind offenzellig. Unter dem Begriff offenzellig wird im Rahmen der vorliegenden Erfindung verstanden, dass mindestens 80, vorzugsweise mindestens 90 und besonders bevorzugt mindestens 95 % der Zellen des Schaumstoffs offen sind. Die Bestimmung der Offenzelligkeit erfolgt nach DIN ISO 4590.

In einer bevorzugten Ausführungsform des erfindungemäßen Verfahrens enthalten die nach dem erfindungsgemäßen Verfahren herstellbaren Hartschaumstoffe neben Urethangruppen auch Isocyanuratgruppen. Derartige Schaumstoffe werden häufig auch als Polyisocyanuratschäume (PIR-Schäume) bezeichnet.

Zu den für das erfindungsgemäße Verfahren eingesetzten Ausgangsprodukten ist im Einzelnen folgendes zu sagen.

Als Polyisocyanate a) werden vorzugsweise aromatische Polyisocyanate eingesetzt, besonders bevorzugt Isomere des Diphenylmethandiisocyanats (MDI) und Gemische aus Diphenylmethandiisocyanats und Polyphenylenpolymethylenpolyisocyanaten (Roh-MDI).

Neben den Polyetheralkoholen bi) sind in der Komponente b) noch weitere Polyole enthalten. Als Verbindungen mit mindestens zwei mit Isocyanatgruppen reaktiven Wasserstoffatomen werden zumeist Polyetheralkohole und/oder Polyesteralkohole, insbesondere Polyetheralkohole, im folgenden als Polyole bii) bezeichnet, eingesetzt.

Die Polyesteralkohole bii) werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Polyesteralkohole bii)haben zumeist eine Funktionalität zwischen 2 und 8, insbesondere 4 bis 8.

Insbesondere als Polyole bii) verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Wie beschrieben, werden für das erfindungsgemäße Verfahren vorzugsweise solche Polyetheralkohole eingesetzt, zu deren Herstellung ausschließlich Propylenoxid verwendet wird.

Als Startermoleküle kommen beispielsweise in Betracht: Wasser, organische Dicarbonsäuren, wie z.B. Bernsteinsäure, Adipinsäure, Phthalsäure und Terephthalsäure.

Vorzugsweise eingesetzt werden mehrwertige, insbesondere zwei- und/oder höherwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxydiphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin.

Bevorzugte Starter für die Herstellung der Polyetheralkohole bii) sind Zucker, insbesondere Saccharose oder Sorbit, und Glyzerin. Häufig werden als Starter auch Mischungen aus Zucker und Glyzerin eingesetzt.

Die Polyetherpolyole bii) besitzen eine Funktionalität von vorzugsweise 2 bis 8 und insbesondere 3 und 6 und Hydroxylzahlen von vorzugsweise 120 mgKOH/g bis 770 mgKOH/g und insbesondere 240 mgKOH/g bis 570 mgKOH/g.

Wie beschrieben, werden die Polyetheralkohole bi) und bii) in einem solchen Verhältnis gemischt, dass die geforderten Werte für Funktionalität und Hydroxylzahl erreicht werden.

Zu den Verbindungen mit mindestens zwei mit Isocyanatgruppen reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen zum Einsatz.

Als Katalysatoren c) können die üblichen und bekannten Polyurethan-Katalysatoren eingesetzt werden. Insbesondere werden Verbindungen eingesetzt, welche die Reaktion der Isocyanatgruppen mit den mit Isocyanatgruppen reaktiven Gruppen stark beschleunigen. Insbesondere eingesetzt werden organische Metallverbindungen, vorzugsweise organische Zinnverbindungen, wie Zinn(II)-salze von organischen Säuren.

Weiterhin können als Katalysatoren stark basische Amine eingesetzt werden. Beispiele hierfür sind sekundäre aliphatische Amine, Imidazole, Amidine, Triazine sowie Alkanolamine.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel d) wird Wasser, das mit Isocyanatgruppen unter Abspaltung von Kohlendioxid reagiert, in Kombination mit mindestens einem sogenannten physikalischen Treibmittel eingesetzt. Bei letzteren handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten eingebracht bzw. in ihnen gelöst werden, beispielsweise Kohlendioxid, Stickstoff oder Edelgase.

Vorzugsweise liegt das Molverhältnis von Wasser zu den physikalischen Treibmitteln im Bereich von größer 0,02 bis 0,5, insbesondere im Bereich zwischen 0,2 bis 0,4.

Die bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Wie beschrieben, ist die Offenzelligkeit ein wesentliches Merkmal der nach dem erfindungsgemäßen Verfahren hergestellten Hartschaumstoffe. Dies ist erforderlich, um die Evakuierung bei der Herstellung der Vakuumisolationspaneele zu ermöglichen. Weiterhin verhindert die Offenzelligkeit eine zu starke thermische Belastung der Schaumstoffe während der Herstellung.

Zur Erhöhung der Anzahl der offenen Zellen werden Zellöffner e1) eingesetzt. Dabei handelt es sich vorzugsweise um Verbindungen, die die Oberflächenspannung der Komponenten bei der Verschäumung beeinflussen. In einer bevorzugten Ausführungsform der Erfindung werden als Zellöffner e1) Ester, besonders bevorzugt Ester von Carbonsäuren, in Kombination mit makromolekularen, ungesättigen Kohlenwasserstoffen eingesetzt. In einer besonders bevorzugten Ausführungsform des erfindungsgemäßen Verfahrens ist der Zellöffner e1) eine Mischung aus makromolekularen, ungesättigten Kohlenwasserstoffen mit einem Phthalsäurester. Diese Mischung ist häufig mit Aminen stabilisiert.

Auch die Schaumstabilisatoren e2) haben einen großen Einfluss auf die Offenzelligkeit der Schaumstoffe. Es hat sich gezeigt, dass bei Verwendung von Polyether-Polydimethylsiloxan-Copolymeren Schäume mit einem hohen Anteil mit offenen Zellen erhalten werden können.

Beispiele für geeignete Stabilisatoren sind B 8870 von Goldtschmidt, der Zellöffnung begünstigt, oder der Stabilisator. L 6164 von Osi.

Besonders vorteilhaft ist es, eine Mischung aus makromolekularen, ungesättigten Kohlenwasserstoffen mit einem Phthalsäurester und Polyether-Polydimethylsiloxan-Copolymeren zu verwenden. Diese kann vorzugsweise in einer Menge von - 0,5-5,0 Gew.-%, bezogen auf das Gewicht der Komponente b) eingesetzt werden. Das Gewichtsverhältnis von e1) zu e2) liegt erfindungsgemäß im Bereich zwischen 0,2--3.

In der Technik werden die Komponenten b), c), d) und e) häufig zu einer sogenannten Polyolkomponente vermischt und in dieser Form mit den Polyisocyanaten a) umgesetzt.

Bei der Herstellung der Schaumstoffe nach dem erfindungsgemäßen Verfahren werden das Polyisocyanat und die Verbindungen mit mindestens zwei mit Isocyanatgruppen reaktiven Wasserstoffatomen bei einem Isocyanatindex im Bereich zwischen 220 und 270 umgesetzt.

Die Herstellung der Schaumstoffe erfolgt, wie beschrieben, vorzugsweise im Blockschäumverfahren. Das Blockschäumverfahren ist im allgemeinen ein diskontinuierlicher Prozess, bei dem große Blöcke, beispielsweise 2x1,2x1,2m, durch relativ langsam reagierende Schaumsysteme hergestellt werden. Dazu werden die Polyolkomponente und das Polyisocyanat a) vermischt und diese Mischung in eine Form eingebracht, wo sie zum Schaum aushärtet. Die Größe der Form hängt von der beabsichtigten Größe des Schaumblocks ab. Nach der Aushärtung des Schaums wird der Block aus der Form entnommen. Danach kann er in die für die Herstellung der Vakuumisolationspaneele erforderlichen Stücke zerkleinert werden, vorzugsweise durch Sägen. Dazu werden/können handelsübliche Band- und Drahtsägen eingesetzt werden. Bei der Verschäumung wird vorzugsweise vor dem Schäumen die Form mit einer Folie ausgekleidet, um eine Benetzung und damit Anhaftung des Schaums an der Formenwandung zu verhindern.

Eine Standformentechnik besteht aus mehreren Formen und einer/mehrerer Mischstationen, zumeist Rührwerke, Mischanlagen wie Niederdruckmischköpfe, kann ebenso eingesetzt werden wie eine Karusselltechnik (Formen auf Karussellteller), bei der in der Regel zentral an einer Position mit einer Mischstation/Anlage gemischt wird.

Die Herstellung der Vakuumisolationspaneele erfolgt, wie oben beschrieben, indem der Hartschaumstoff von einer gasundurchlässigen Folie umhüllt, diese zugeschweißt und evakuiert wird.

Durch das erfindungsgemäße Verfahren ist es möglich, auf einfache Weise offenzellige Urethangruppen enthaltende Hartschaumstoffe herzustellen, die eine hohe Offenzelligkeit und gute mechanische Eigenschaften aufweisen und zu Vakuumisolationspaneelen verarbeitet werden können. Überraschenderweise kommt es zu keiner Überhitzung und thermischen Schädigung der Schaumstoffe.

Die Erfindung soll an den nachfolgenden Beispielen näher erläutert werden.

Eingesetzte Ausgangsstoffe:
a) Polyole:
   - Polyol 1:: OH-Zahl=485; hergestellt durch Anlagerung von Propylenoxid an Saccharose, und Glycerin
   - Polyol 2:: OH-Zahl=105; hergestellt durch Anlagerung von Propylenoxid an Propylenglykol
   - Polyol 3:: OH-Zahl=250; hergestellt durch Anlagerung von Propylenoxid an Propylenglykol
   - Polyol 4:: OH-Zahl=400; hergestellt durch Anlagerung von Propylenoxid an Glycerin
   - Polyol 5:: OH-Zahl=56; hergestellt durch Anlagerung von Propylenoxid an Glycerin
b) Treibmittel:
   6. Wasser
   7. Kohlenwasserstoffe (Gemische oder Reinsubstanzen im Siedereich von 25-100 °C
c) Katalysatoren:
   8. Polycat^{®} 58 von Air Products
   9. Polycat^{®} 9 von Air Products
   10. Kaliumacetat in EG BASF
   11. Dimethylamino-N-methyl-ethanolamin (Dabco^{®} T)
d) Zusatzmittel:
   12. Tegostab^{®} B8870 von Th. Goldschmidt (Stabilisator)
   13. Ortegol^{®} 501 von Th. Goldschmidt (Zellöffner)

### Isocyanat:

### Polymer-MDI

I. Lupranat^{®} M20 NCO-Gehalt = 31,8 g/100g von BASF
II. Lupranat^{®} M70 NCO-Gehalt = 31,4 g/100g von BASF

Die Komponenten a) bis e) wurden zu einer Polyolkomponente vermischt und mit dem Isocyanat umgesetzt. Die Mengen der verwendeten Einsatzstoffe finden sich in Tabelle 1) die Vermischung erfolgte in einem Mischkopf. Die Reaktionsmischung wurde in eine Laborform mit den Seitenlängen 418x700x455 mm ausgetragen und dort aushärten gelassen.

**Tabelle 1**

| Edukt | Beispiel 1 (92-B1) | Beispiel 2 (94-B3) | Vergleich 3 (75-B1) | Vergleich 4 (75-B2) | Vergleich 5 (75-B3) |
|---|---|---|---|---|---|
| 1 (A-Komp.) | 44,10 | 44,25 | 45,05 | 45,05 | 45,05 |
| 2 (A-Komp.) | 44,10 | 44,25 | | | |
| 3 (A-Komp.) | 9,15 | 9,15 | 22,20 | 22,20 | 22,20 |
| 4 (A-Komp.) | | | 30,80 | 30,80 | 30,80 |
| 5 (A-Komp.) | | | 5,00 | | 5,00 |
| 6 (A-Komp.) | 0,55 | 0,45 | 0,20 | 0,20 | 0,20 |
| 7 (A-Komp.) | 9,50 | 9,50 | 10,50 | 11,00 | 10,30 |
| 8 (A-Komp.) | 0,50 | 0,40 | | | |
| 9 (A-Komp.) | | | 0,75 | 0,75 | 0,75 |
| 10 (A-Komp.) | 0,70 | 0,60 | | | |
| 11 (A-Komp.) | | | 0,10 | | 0,10 |
| 12 (A-Komp.) | 0,90 | 0,90 | 1,00 | 1,00 | 1,00 |
| 13 (A-Komp.) | 1,80 | 1,80 | 1,20 | 0,80 | 0,80 |
| I (B-Komp.) | | | | | |
| II (B-Komp.) | 194,00 | 199,00 | 111,00 | 106,20 | 110,40 |
| Kennzahl | 244,00 | 256,50 | 111,00 | 107,00 | 111,00 |

Zur Bestimmung des Härtungsverlaufs wurden kl. Schaumblöcke in einer Laborform mit einem Volumen von 133 I (418x700x455mm) geschäumt. Die Geometrie der Form wurde den realen Produktionsformen entsprechend gewählt, d.h. die Seitenlängenverhältnisse waren identisch. Ferner wurde in einer Längsseitenwand zentral ein Druckaufnehmer (0-2,5 bar) eingebaut, der mit einem Speicher- und Steuergerät verbunden wurde, so dass die Daten per Schnittstelle dann mit einem PC ausgelesen und ausgewertet werden konnten. Dadurch ließen sich Druckkurven über die Zeit während des Aufschäumens und Aushärtens aufzeichnen und miteinander vergleichen. Die Kurven sind in Bild 1 gegenüber gestellt.

Es hat sich gezeigt, dass der Druckabbau der in den Beispielen 1 - 2 wesentlich schneller erfolgt als in den Vergleichsbeispielen. Dadurch lassen sich kürzere Zykluszeiten realisieren und die Rissbildung im Schauminnern vermeiden. Gerade die Rissbildung ist besonders problematisch, da einerseits im Extremfall der Block nicht mehr verwertbar ist und damit das Verfahren unwirtschaftlich wird, andererseits geht von Rissen eine extreme Brandgefahr aus, denn durch die Risse dringt Luftsauerstoff ungehindert an den noch heißen Schaumkern, was letztlich zum Brand führen kann.

Die im Vergleich beschriebenen Schäume (PUR + PIR) sind im Inneren (ohne Außenhaut) 100 % offenzellig und damit für die Vakuum - bzw. VIP-Technik geeignet. Die Offenzelligkeiten wurden mittels Pyknometer (Accupyk 1330 von Micromeritics) bestimmt und entsprechend der allgemein gültigen Korrektur zu realen Werten umgerechnet.

## Patentansprüche

1. Verfahren zur Herstellung von Urethangruppen enthaltenden Hartschaumstoffen durch Umsetzung von
a) Polyisocyanaten mit
b) Verbindungen mit mindestens zwei mit Isocyanatgruppen reaktiven b) Verbindungen mit mindestens zwei mit Isocyanatgruppen reaktiven Wasserstoffatomen in Anwesenheit von
c) Katalysatoren und
d) Treibmitteln,
**dadurch gekennzeichnet, dass**
- die Mischung der in den Verbindungen mit mindestens zwei mit Isocyanatgruppen reaktiven Wasserstoffatomen b) enthaltenden Alkohole eine Funktionalität im Bereich von 2,5 bis 5,5 und eine Hydroxylzahl im Bereich von 200-400 mg KOH/g aufweist,
- das Treibmittel d) eine Mischung aus Wasser und mindestens einem physikalischen Treibmittel ist, und
- die Umsetzung bei einem Isocyanatindex im Bereich zwischen 220-270
und
- in Anwesenheit eines Stabilisators e2) und eines Zellöffners e1) durchgeführt wird, wobei der Stabilisator e2) ein Polyether-Polydimethylsiloxan-Copolymer und der Zellöffner e1) eine Mischung aus makromolekularen, ungesättigten Kohlenwasserstoffen mit einem Ester ist und das Gewichtsverhältnis von Zellöffner e1) zu Stabilisator e2) im Bereich von 0,2 - 3 liegt.

2. Verfahren nach Anspruch 1, **dadurch gekennzeichnet, dass** in der Komponente b) mindestens ein zweifunktioneller Polyetheralkohol bi) enthalten ist.

3. Verfahren nach Anspruch 1, **dadurch gekennzeichnet, dass** in der Komponente b) mindestens ein zweifunktioneller Polyetheralkohol bi) mit einer Hydroxylzahl im Bereich zwischen 80 und 120 mg KOH/g enthalten ist.

4. Verfahren nach Anspruch 1, **dadurch gekennzeichnet, dass** beim Treibmittel d) das Molverhältnis zwischen Wasser und physikalischem Treibmittel im Bereich von größer 0,02 bis 0,5 liegt.

5. Verfahren nach Anspruch 1, **dadurch gekennzeichnet, dass** beim Treibmittel c) das Molverhältnis zwischen Wasser und physikalischem Treibmittel im Bereich von 0,2 bis 0.4 liegt.

6. Verfahren nach Anspruch 1, **dadurch gekennzeichnet, dass** der Zellöffner e1) eine Mischung aus makromolekularen, ungesättigten Kohlenwasserstoffen mit einem Phthalsäurester Ist.

## Claims

1. A process for producing rigid foams comprising urethane groups by reacting
a) polyisocyanates with
b) compounds b) compounds having at least two having at least two hydrogen atoms which are reactive toward isocyanate groups which are reactive toward isocyanate groups in the presence of
c) catalysts and
d) blowing agents,
wherein
- the mixture of the alcohols comprised in the compounds b) having at least two hydrogen atoms which are reactive toward isocyanate groups has a functionality in the range from 2.5 to 5.5 and a hydroxyl number in the range 200-400 mg KOH/g,
- the blowing agent d) is a mixture of water and at least one physical blowing agent, and
- the reaction is carried out at an isocyanate index in the range 220-270 and
- in the presence of a stabilizer e2) and a cell opener e1), where the stabilizer e2) is a polyether-polydimethylsiloxane copolymer and the cell opener e1) is a mixture of macromolecular, unsaturated hydrocarbons with an ester and the weight ratio of cell opener e1) to stabilizer e2) is in the range 0.2-3.

2. The process according to claim 1, wherein at least one bifunctional polyether alcohol bi) is comprised in the component b).

3. The process according to claim 1, wherein at least one bifunctional polyether alcohol bi) having a hydroxyl number in the range from 80 to 120 mg KOH/g is comprised in the component b).

4. The process according to claim 1, wherein the molar ratio of water to physical blowing agent in the blowing agent d) is in the range from > 0.02 to 0.5.

5. The process according to claim 1, wherein the molar ratio of water to physical blowing agent in the blowing agent c) is in the range from 0.2 to 0.4.

6. The process according to claim 1, wherein the cell opener e1) is a mixture of macromolecular, unsaturated hydrocarbons with a phthalic ester.

## Revendications

1. Procédé pour la production de mousses rigides contenant des groupes uréthane, par mise en réaction de
a) polyisocyanates avec
b) des composés comportant au moins deux composés b) réactifs avec des groupes isocyanates, comportant au moins deux atomes d'hydrogène réactifs avec des groupes isocyanate, en présence de
c) catalyseurs et
d) d'agents porogènes,
**caractérisé en ce que**
- le mélange des alcools contenus dans les composés b) comportant au moins deux atomes d'hydrogène réactifs avec des groupes isocyanate présente une fonctionnalité dans la plage de 2,5 à 5,5 et un indice d'hydroxy dans la plage de 200-400 mg de KOH/g,
- l'agent porogène d) est un mélange d'eau et d'au moins un agent porogène physique, et
- la réaction est effectuée à un indice d'isocyanate dans la plage comprise entre 220-270 et
- en présence d'un stabilisant e2) et d'un agent d'ouverture de cellules e1), le stabilisant e2) étant un copolymère polyéther-polydiméthylsiloxane et l'agent d'ouverture de cellules e1) étant un mélange d'hydrocarbures insaturés macromoléculaires avec un ester et le rapport pondéral de l'agent d'ouverture de cellules e1) au stabilisant e2) se situant dans la plage de 0,2 à 3.

2. Procédé selon la revendication 1, **caractérisé en ce que** dans le composant b) est contenu au moins un polyétheralcool bifonctionnel b1).

3. Procédé selon la revendication 1, **caractérisé en ce que** dans le composant b) est contenu au moins un polyétheralcool bifonctionnel b1) ayant un indice d'hydroxy dans la plage comprise entre 80 et 120 mg de KOH/g.

4. Procédé selon la revendication 1, **caractérisé en ce que** dans l'agent porogène d) le rapport molaire entre l'eau et un agent porogène physique se situe dans la plage allant de plus de 0,02 à 0,5.

5. Procédé selon la revendication 1, **caractérisé en ce que** dans l'agent porogène d) le rapport molaire entre l'eau et un agent porogène physique se situe dans la plage allant de plus de 0,2 à 0,4.

6. Procédé selon la revendication 1, **caractérisé en ce que** l'agent d'ouverture de cellules e1) est un mélange d'hydrocarbures insaturés macromoléculaires avec un ester d'acide phtalique.
